Europäisches Patentamt

European Patent Office

Office européen des brevets

(11) Veröffentlichungsnummer: **0 242 796**
**A1**

(12) **EUROPÄISCHE PATENTANMELDUNG**

(21) Anmeldenummer: 87105620.6

(22) Anmeldetag: 15.04.87

(51) Int. Cl.³: **F 16 L 15/04**
F 16 L 47/00, F 16 L 13/10
F 16 J 15/00, F 16 J 15/14
F 16 B 39/00

(30) Priorität: 22.04.86 CH 1637/86

(43) Veröffentlichungstag der Anmeldung:
28.10.87 Patentblatt 87/44

(84) Benannte Vertragsstaaten:
AT BE CH DE FR GB IT LI LU NL

(71) Anmelder: GEORG FISCHER AKTIENGESELLSCHAFT
Mühlentalstrasse 105
CH-8201 Schaffhausen(CH)

(72) Erfinder: Szederjei, Eugene, Dipl.-Ing.
Dorfstrasse 535
CH-8448 Uhwiesen(CH)

(54) Gewindeverbindung für Rohrinstallationen.

(57) Zum Abdichten einer Gewindeverbindung ist eine in den Fitting (3) einschraubbare Dichthülse (5) vorgesehen. Diese ist als Behälterhülse (9) ausgebildet, welche eine dünne Wandung (11) aufweist und in welcher ein flüssiges Dichtmittel (13) angeordnet ist. Beim Einschrauben des Rohrteiles (1) wird die Wandung (11) aufgerissen, wobei das Dichtmittel (13) in die Zwischenräume der beiden Gewinde (2, 4) fliesst und diese abdichtet.

Fig. 4

EP 0 242 796 A1

- /ß -

GEORG FISCHER AKTIENGESELLSCHAFT,.     8201 Schaffhausen

2521/FIT / 22.4.1986 / Li-ug

Gewindeverbindung für Rohrinstallationen

Die Erfindung betrifft eine Gewindeverbindung für Rohrinstallationen, wie sie im Oberbegriff von Anspruch 1 gekennzeichnet ist.

Es ist bekannt, Gewindeverbindungen durch Umwickeln des
Aussengewindes mit Hanf oder mit einem Dichtband aus
Kunststoff abzudichten.

Im weiteren ist es bekannt, auf das Aussengewinde ein
flüssiges Dichtungsmaterial wie z.B. Loctite aufzubringen,
welches nach dem Herstellen der Gewindeverbindung aushärtet.

Die Herstellung dieser Abdichtungen sind alle erst bei Montage mit beträchtlichem Arbeitsaufwand herstellbar, wobei
die Dichtwirkung von dem Geschick des die Rohrverbindung
erstellenden Arbeiters abhängt. Ausserdem sind diese Abdichtarten für eine mechanisierte Montage nicht geeignet.

- 2 -

Aufgabe der vorliegenden Erfindung ist die Schaffung von Gewindeverbindungen der eingangs genannten Art, deren Abdichtung die vorgängig genannten Mängel nicht aufweist und welche eine einfache Montage mit montagefertigen Elementen bei einwandfreier Dichtwirkung gewährleistet, wobei die Montage auch mechanisiert erfolgen kann.

Erfindungsgemäss wird dies durch die kennzeichnenden Merkmale von Anspruch 1 gelöst.

Besonders vorteilhafte Ausführungen der Erfindung sind in den abhängigen Ansprüchen gekennzeichnet.

Die Erfindung ist anhand von mehreren Ausführungsbeispielen in den beiliegenden Zeichnungen dargestellt und nachfolgend beschrieben.

Es zeigen:

Fig. 1          eine Gewindeverbindung mit einer auf das
                Rohrteil schiebbaren Dichthülse vor der
                Montage,

Fig. 2          die in Fig. 1 dargestellten Teile in
                montiertem Zustand,

Fig. 3          eine Ausführungsvariante der in Fig. 1
                dargestellten Dichthülse,

Fig. 4          eine Gewindeverbindung mit einer in den
                Fitting einbringbaren oder einpressbaren
                Dichthülse vor der Montage,

Fig. 5          den Fitting mit eingebrachter oder eingepresster Dichthülse von Fig. 4,

- 3 -

Fig. 6        eine Ausführungsvariante der in Fig. 4 gezeigten Dichthülse,

Fig. 7        eine Rohrverbindung mit einer in den Fitting einsteckbaren Dichthülse vor der Montage,

Fig. 8        einen Querschnitt der in Fig. 7 dargestellten Dichthülse,

Fig. 9        den Fitting mit eingesteckter Dichthülse,

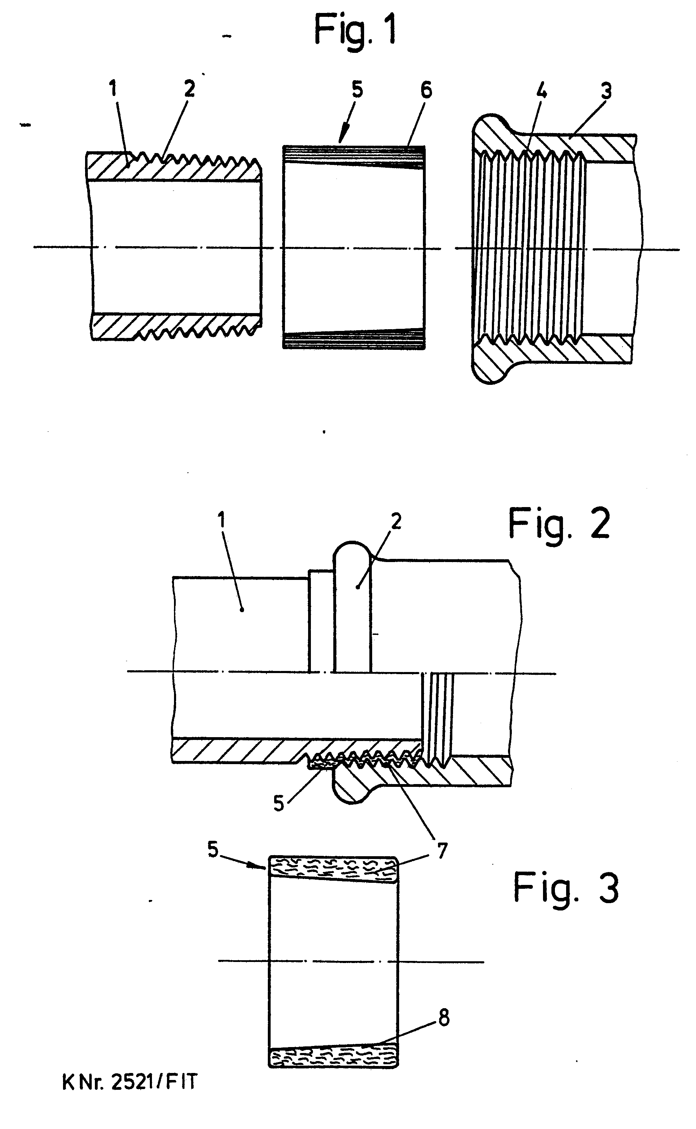

Fig. 1 zeigt ein mit einem Aussengewinde 2 versehenes Rohrteil 1, ein mit einem Innengewinde 4 versehenen Fitting 3 und eine auf das Rohrteil 1 aufschiebbare Dichthülse 5. Die Dichthülse 5 besteht aus einem in entsprechender Länge gewickelten Dichtungsband 6 wie z.B. aus einem Kunststoffband oder aus einem mit Dichtpaste getränkten Gewebeband, einen sogenannten Paraliq-Vlies. Vorteilhafterweise wird die Dichthülse nach dem Aufschieben auf das Aussengewinde 2 mittels einer speziellen Zange satt aufgepresst.

Wie aus Fig. 2 ersichtlich, werden alle Zwischenräume zwischen dem Aussengewinde 2 und dem Innengewinde 4 beim Einschrauben des Rohrteiles 1 in den Fitting 3 durch das Material der Dichthülse 5 satt ausgefüllt, so dass einwandfreie Dichtheit der Rohrverbindung gegeben ist.

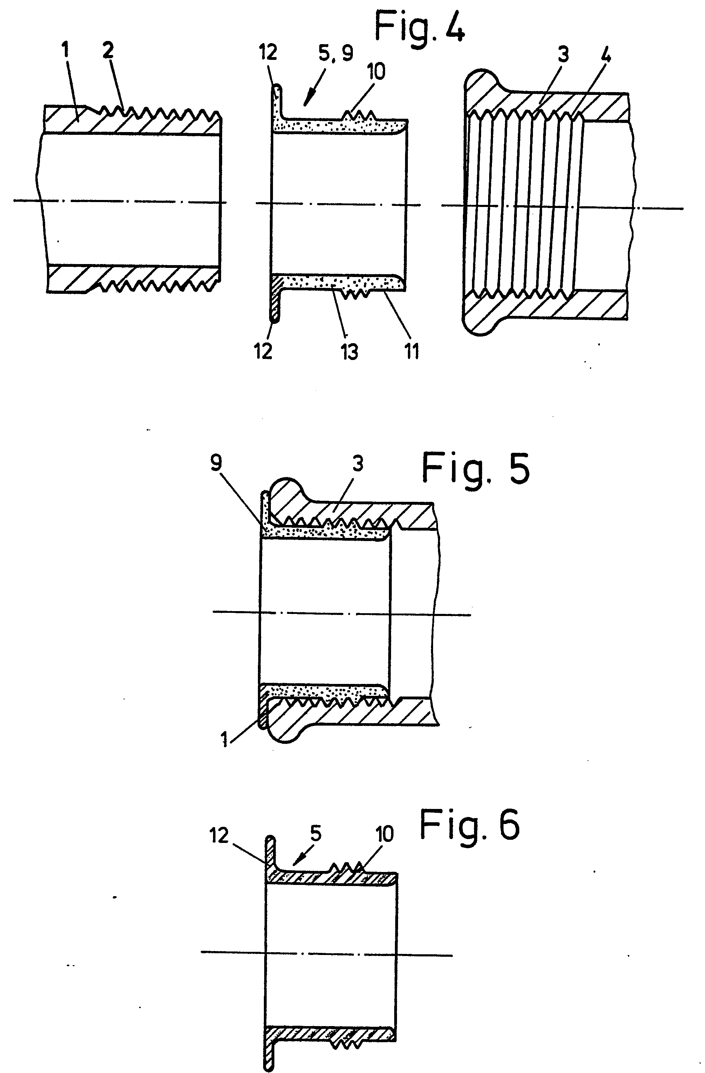

Fig. 3 zeigt eine Ausführungsvariante der in Fig. 1 gezeigten Dichthülse 5. Diese besteht aus einem aus Hanf und Dichtungspaste hergestellten Ring 7, welcher in einer Folie 8 eingekapselt ist. Die Folie 8 kann aus einem Teflonüberzug über den Ring 7 bestehen.

- 4 -

Beide Ausführungsvarianten der Dichthülse können am Innen-
und/oder Aussenumfang in Längsrichtung konisch ausgebildet
sein und einen am Rohrteil-Ende anliegenden Bund aufweisen.

Fig. 4 und 5 zeigen eine Rohrverbindung, bei welcher eine
Dichthülse 5 in das Innengewinde 4 des Fittings einschraubbar oder einpressbar ist, wobei am Aussenumfang der Dichthülse 5 einige, vorzugsweise drei bis vier, Gewindegänge 10
angeordnet sind. Die Dichthülse 5 ist als Behälterhülse
9 ausgebildet, mit einer Wandung 11 aus z.B. einer Kunststoff-Folie, welche die ganze Form einschliesslich einem
Bund 12 und die Gewindegänge 10 umschliesst. In der
Behälterhülse ist ein Dichtmittel 13 in pastöser oder
flüssiger Form eingeschlossen. Die Behälterhülse 9 wird,
wie aus Fig. 5 ersichtlich, in den Fitting 3 eingeschraubt
oder eingepresst, wobei dies vorteilhafterweise bereits vor
der Auslieferung an die Verwender erfolgt.

Durch das Eindrehen des Rohrteiles 1 bei Erstellung der
Rohrverbindung wird die Behälterhülse 9 verpresst und
platzt. Das Dichtmittel 13 kann sich dann in den Spalten
zwischen dem Aussengewinde 2 und dem Innengewinde 4 verteilen, wo es nach Erhärten eine Abdichtung der Gewindeverbindung bildet. Das in der Behälterhülse 9 angeordnete
Dichtmittel 13 kann auch ein Ein- oder Zwei-Komponenten-
Polyurethan-Kunststoff sein, welcher nach dem Freiwerden
schäumt und sich im Volumen vergrössert, so dass eine
einwandfreie Dichtwirkung entsteht.

Wie aus Fig. 4 in der einen Hälfte der dargestellten
Dichthülse 5 ersichtlich, kann der Bund 12 als Flanschring z.B. aus vollem Kunststoff ausgebildet sein.

- 5 -

Fig. 6 zeigt eine in den Fitting 3 einschraubbare Dichthülse 5, welche in der äusseren Form der in Fig. 3
gezeigten Dichthülse entspricht, aber aus einem selbstdichtenden, schwammigen Gewebe bzw. aus einem Kunststoff-
Schaumstoff mit einem in dessen Poren angeordneten Dichtmittel besteht. Beim Einschrauben des Rohrteiles wird das
Dichtmittel aus den Poren herausgepresst und füllt die
Zwischenräume in den Gewindegängen aus.

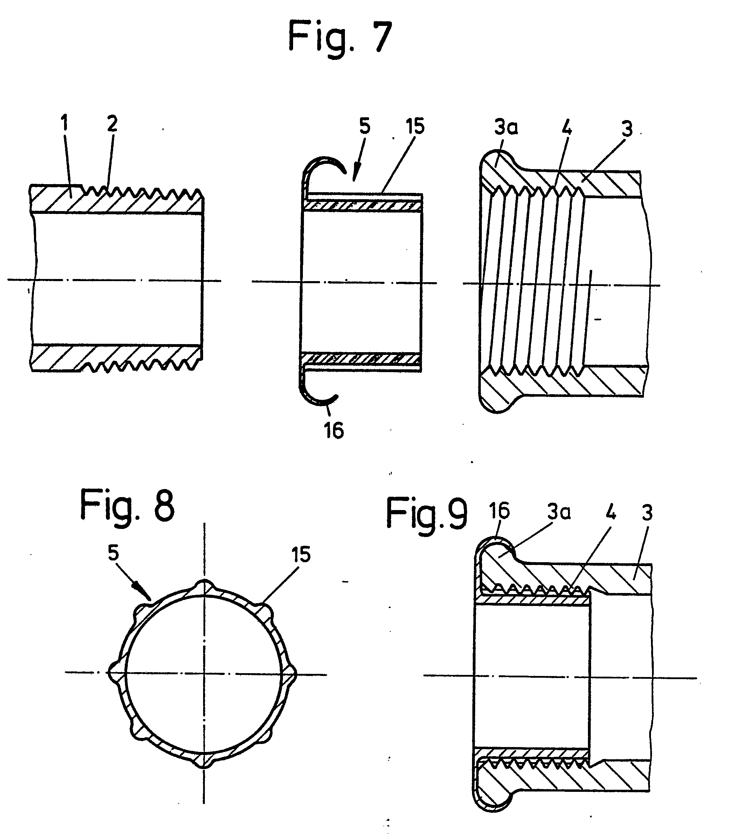

Die Fig. 7 bis 9 zeigen eine in den Fitting 3 einsteckbare Dichthülse 5, welche am Aussenumfang des Einsteckteiles in Längsrichtung verlaufende Wülste 15 aufweist.
Die Dichthülse 5 weist einen Bund auf, welcher als über
den Fittingsrand 3a stülpbare Hohlwulst 16 ausgebildet
ist. Durch diesen Hohlwulst 16 ist die Dichthülse 5 axial
in beiden Richtungen am Fitting gehalten. Beim Einschrauben des Rohrteiles 1 verhindern die längsverlaufenden
Wülste 15 ein Verdrehen der Dichtungshülse. Die Dichtungshülse ist vorzugsweise aus einem verformbaren Kunststoff
oder Elastomer hergestellt.

- 1 -

P a t e n t a n s p r ü c h e

2521/FIT

1. Gewindeverbindung für ein Medium führende Rohrinstallationen mit einem Fitting und einem in diesen eingeschraubten Rohrteil, wobei die Verbindung mit einer Abdichtung versehen ist, dadurch gekennzeichnet, dass die Abdichtung aus einer zwischen den Gewinden (2, 4) angeordneten Dichthülse (5) besteht.

2. Gewindeverbindung nach Anspruch 1, dadurch gekennzeichnet, dass die Dichthülse (5) zum Aufschieben auf das Aussengewinde (2) des Rohrteiles (1) ausgebildet ist.

3. Gewindeverbindung nach Anspruch 2, dadurch gekennzeichnet, dass die Dichthülse (5) aus einem gewickelten Dichtungsband (6) hergestellt ist, welches z.B. aus einem mit Dichtpaste getränkten Gewebe besteht.

(Fig. 1 und 2)

4. Gewindeverbindung nach Anspruch 2, dadurch gekennzeichnet, dass die Dichthülse (5) aus einem in einer Folie (8) eingekapselten Ring (7) aus Hanf und Dichtungspaste besteht.

(Fig. 3)

5. Gewindeverbindung nach Anspruch 1, dadurch gekennzeichnet, dass die Dichthülse (5) am Innengewinde (4) des Fittings (3) anbringbar ist und einen Bund (12) zur Anlage am Fittingsende aufweist.

6. Gewindeverbindung nach Anspruch 5, dadurch gekennzeichnet, dass die Dichthülse (5) als Behälterhülse (9) aus einer Kunststoff-Folie ausgebildet ist, in welcher ein Dichtmittel (13) in pastöser oder flüssiger Form angeordnet ist.                     (Fig. 4 und 5)

7. Gewindeverbindung nach Anspruch 6, dadurch gekennzeichnet, dass als Dichtmittel (13) ein Ein- oder Zwei-Komponenten-Polyurethan-Schaumstoff in der Behälterhülse (9) angeordnet ist.                     (Fig. 4 und 5)

8. Gewindeverbindung nach Anspruch 5, dadurch gekennzeichnet, dass die Dichthülse (5) aus einem dichtenden, schwammigen Gewebe hergestellt ist.     (Fig. 6)

9. Gewindeverbindung nach einem der Ansprüche 5 bis 8, dadurch gekennzeichnet, dass die Dichthülse (5) durch Anordnung von Gewindegängen (10) am Aussenumfang in das Innengewinde (4) des Fittings (3) einbringbar ist.

10. Gewindeverbindung nach Anspruch 5, dadurch gekennzeichnet, dass der Bund (12) einen über den Fittingsrand stülpbaren Hohlwulst (16) aufweist und dass am Aussenumfang der Dichthülse (5) in Längsrichtung verlaufende Wulste (15) angeordnet sind.
                     (Fig. 7 bis 9)

0242796

# Fig. 1

# Fig. 2

# Fig. 3

K Nr. 2521/FIT

2/3

0242796

Fig. 4

Fig. 5

Fig. 6

K. Nr. 2521/FIT

# Fig. 7

# Fig. 8

# Fig. 9

K. Nr. 2521 / FIT

# EUROPÄISCHER RECHERCHENBERICHT

## EINSCHLÄGIGE DOKUMENTE

EP 87105620.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DD - A - 160 006 (VOIGT HELMUT) <br> * Gesamt * <br> -- | 1,5,9 | F 16 L 15/04 <br> F 16 L 47/00 <br> F 16 L 13/10 |
| A | DE - A1 - 2 630 338 (MENKHOFF) <br> * Gesamt * <br> -- | 1 | F 16 J 15/00 <br> F 16 J 15/14 <br> F 16 B 39/00 |
| A | DE - A1 - 2 538 061 (GENERAL ELEC-TRIC CO.) <br> * Gesamt * <br> -- | 1 | |
| A | DE - A1 - 3 203 595 (DEIMOLD ROLF) <br> * Gesamt * <br> -- | 1 | |
| A | DE - A1 - 3 033 859 (RUBINETTERIE A.) <br> * Gesamt * <br> ---- | 1 | |

RECHERCHIERTE SACHGEBIETE (Int. Cl. 4)

F 16 L 13/00
F 16 L 15/00
F 16 L 17/00
F 16 L 19/00
F 16 L 21/00
F 16 L 47/00
F 16 J 15/00
F 16 B 39/00

Der vorliegende Recherchenbericht wurde für alle Patentansprüche erstellt.

| Recherchenort | Abschlußdatum der Recherche | Prüfer |
|---|---|---|
| WIEN | 22-06-1987 | SCHUGANICH |